# EUROPEAN PATENT SPECIFICATION

(11) **EP 3 461 079 B1**
(45) Date of publication and mention of the grant of the patent: **12.04.2023**
(21) Application number: 17826913.0
(22) Date of filing: 04.07.2017
(51) Int. Cl.: H04L 45/50

(54) **PATH ESTABLISHMENT METHOD AND DEVICE, AND NETWORK NODE**
PFADAUFBAUVERFAHREN UND -VORRICHTUNG UND NETZWERKKNOTEN
PROCÉDÉ ET DISPOSITIF D'ÉTABLISSEMENT DE CHEMIN, ET NOEUD DE RÉSEAU

(30) Priority: 14.07.2016 CN 201610556944
(43) Date of publication of application: 27.03.2019
(73) Proprietor: ZTE Corporation, Shenzhen, Guangdong 518057 (CN)
(72) Inventor: PENG, Shaofu, Shenzhen, Guangdong 518057 (CN); WANG, Huilai, Shenzhen, Guangdong 518057 (CN); SUN, Jinsong, Shenzhen, Guangdong 518057 (CN)
(74) Representative: Novagraaf Technologies
(86) International application number: PCT/CN2017/091709
(87) International publication number: WO 2018/010576

(56) References cited:
- CN-A- 1 581 818
- CN-A- 1 652 542
- CN-A- 102 710 519
- CN-A- 103 098 426
- US-A1- 2005 094 636
- US-A1- 2013 022 041
- RAN CHEN SHAOFU PENG ZTE CORPORATION: "LDP Extensions for FEC elements sharing label; draft-chenpeng-mpls-ldp-ext-00.txt", LDP EXTENSIONS FOR FEC ELEMENTS SHARING LABEL; DRAFT-CHENPENG-MPLS-LDP-EXT-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 28 October 2016 (2016-10-28), pages 1-7, XP015116104, [retrieved on 2016-10-28]
- Kim Pedersen: "MPLS VPN Per VRF Label feature - Packet-forwarding.net", , 17 March 2013 (2013-03-17), XP055706065, https://www.packet-forwarding.net Retrieved from the Internet: URL:https://www.packet-forwarding.net/2013 /05/17/mpls-vpn-per-vrf-label-feature/ [retrieved on 2020-06-17]

## Description

### Technical Field

The present invention relates to the communication field, and in particular to a path establishment method and device, and a storage medium.

### Background

At present, a Multiprotocol Label Switching (MPLS) based Label Switched Path (LSP) which is established based on a Forwarding Equivalence Class (FEC) of a prefix type generally adopts a manner of distributing a label according to each FEC. Because the scale of the FEC is very large, it occupies a lot of label resources, a requirement for simultaneously establishing the MPLS LSP according to multiple MPLS label distribution protocols (for example, a Label Distribution Protocol (LDP), a Border Gateway Protocol (BGP), and a Resource Reservation Protocol-Traffic Extension (RSVP-TE)) cannot be satisfied. If a piece of signaling occupies too many label resources, requirements of other pieces of signaling for the label resources will not be satisfied.

Aiming at this problem, many solutions are presented, but limited to application scenarios. For example, in a Layer 3 Virtual Private Network (L3VPN) scenario, a manner of distributing a label for each Virtual Private Network (VPN) which is configured on a Provider Edge (PE) only reduces occupation of the label resources of VPN LSP on the PE node, but does not reduce occupation of the label resources of the VPN LSP on other nodes. A manner of distributing a label for each next hop may only be adapted to a scenario where there are few outgoing labels corresponding to the next hop. For example, in a L3VPN option B cross-domain scenario, the manner of distributing a label for each next hop is configured on an Autonomous System Border Router (ASBR), at this point, it is necessary to configure a manner of distributing a label for each VPN on the PE, which cannot be adapted to a common LDP LSP.

Patent No.US 2013/022041 and document Kim Pedersen "MPLS VPN Per VRF Label feature-Packet-forwarding.net" provide related technical solutions; however, the above mentioned problem still remains unsolved.

### Summary

The following is an overview of the theme elaborated in this application. The overview is not intended to limit the protection scope of the claims.

The present invention is defined by the appended independent claims, the dependent claims constitute embodiments of the invention, any other embodiment of the description not covered by the appended claims is to be considered as not being part of the present invention.

The embodiments of the present invention provide a path establishment method ,device and a storage medium for satisfying a requirement for label resources, as defined by the appended set of claims.

### Brief Description of the Drawings

Fig. 1 is a structure diagram of hardware of a terminal for a method.
Fig. 2 is a flowchart of the method for establishing a path according to an embodiment of the present invention.
Fig. 3 is a flowchart of the method for establishing a path.
Fig. 4 is a format diagram of a host-parasitism FEC Relationship Tag Length Value (TLV).
Fig. 5 is a format diagram of a label borrowing message.
Fig. 6 is a processing flowchart showing that an egress node generates a host-parasitism FEC relationship.
Fig. 7 is a processing flowchart showing that an ingress/transit node receives the host-parasitism FEC relationship from a label notification or a recycle message.
Fig. 8 is a processing flowchart showing that the ingress/transit node receives the host-parasitism FEC relationship from the label borrowing message.
Fig. 9 is a flowchart of establishing an LDP LSP.
Fig. 10 is a flowchart of establishing a BGP LSP.
Fig. 11 is a flowchart of establishing the BGP LSP.
Fig. 12 is a first structure diagram of a device for establishing a path.
Fig. 13 is a second structure diagram of the device for establishing a path.
Fig. 14 is a third structure diagram of the device for establishing a path.
Fig. 15 is a structure diagram of a second determining module 144 in the device for establishing a path.
Fig. 16 is a third structure diagram of the device for establishing a path.
Fig. 17 is a structure diagram of a network node.

### Detailed Description of the Embodiments

The present application is elaborated below with reference to the accompanying drawings and embodiments.

It is to be noted that the terms like "first" and "second" in the specification, claims and accompanying drawings of the present invention are used for differentiating the similar objects, but do not have to describe a specific order or a sequence.

Although RFC5036 supports on protocols that one FEC TLV may include a plurality of FEC elements, and these FEC elements may share a label, no method about how to share the label is provided. Because there is no feasible method, in an actual network deployment, there are few scenarios where a plurality of FEC elements are included in one FEC TLV, generally one node may distribute the same label 3 for all its local or directly connected prefix FECs, at this point, these prefix FECs may be included in the same FEC TLV as the FEC elements. Such an action of sharing a label hardly eases the tension of occupying the label resources of the entire network.

Both Open Shortest Path First (OSPF) and Intermediate System to Intermediate System (ISIS) divide areas or levels to a physical network. When a topology is calculated based on the network with divided areas or levels, the node in each area only calculates the topology in this area, but calculates information about routes to prefixes of the entire network. Each prefix has its start node (or called notification node) information, but for the prefix out of the area, its start node information changes into a border node of this area. Actually, more and more application scenarios indicate that except whether a prefix is in or out of the area needs to be known, its original start node (or called original notification node) also needs to be known, for example, a Maximally Redundant Tree (MRT) scenario. For this, an Interior Gateway Protocol (IGP) and even a BGP need to carry their original start node information when notifying the prefix. From the perspective of the latest standard progress, the ISIS has supplemented this capability in RFC7794, and other protocols need to be supplemented.

### Embodiment one

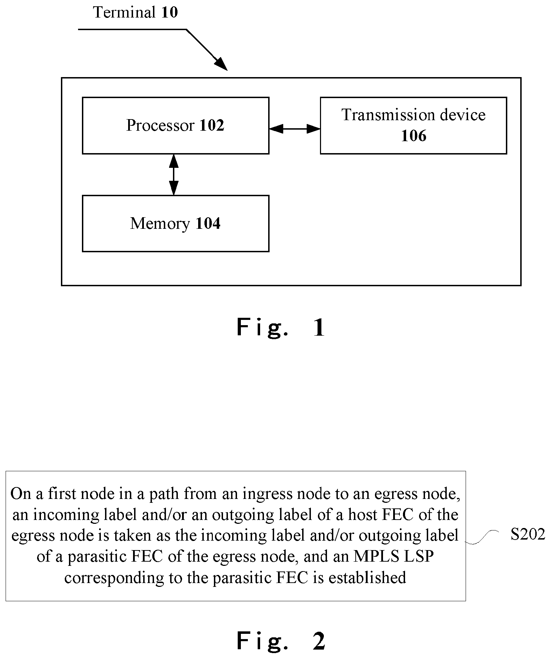

The embodiment of method provided by the first embodiment may be performed in a terminal, a computer terminal or similar operating devices. By taking that the method is performed on the terminal, Fig. 1 is a structure diagram of hardware of a terminal for a method for establishing a path according to an embodiment of the present invention. As shown in Fig. 1, the terminal 10 may include one or more (only one is shown here) of a processor 102 (the processor 102 may include, but not limited to, a Micro Processor Unit (MCU) or a Field Programmable Gate Array (FPGA), and other processing devices), a memory 104 for storing data, and a transmission device 106 for a communication function. Those of ordinary skill in the art may understand that the structure shown in Fig. 1 is only schematic, and does not form a limit to the structure of the above electronic device. For example, the terminal 10 may also include more or less components than that in Fig. 1, or has a configuration different from that in Fig. 1.

The memory 104 may be configured to store a software program and module of application software, for example, a program instruction/module corresponding to the method for establishing a path in the embodiments of the present invention. The processor 102 executes various function applications and data processing by running the software program and module stored in the memory 104, namely implementing the method. The memory 104 may include a high-speed Random Access Memory (RAM), and may also include a nonvolatile memory, for example, one or more magnetic storage device, a flash memory, or other nonvolatile solid state memory. In some examples, the memories 104 may further include memories remotely set relative to the processor 102, and these remote memories may be connected to the terminal 10 through the network. The examples of the network include, but not limited to, Internet, Intranet, LAN, mobile communication networks and a combination of them.

The transmission device 106 is configured to receive or send data via a network. An example of the network may include a wireless network provided by a communication provider of the terminal 10. In an example, the transmission device 106 includes a Network Interface Controller (NIC), which may be connected with other network devices through a base station to communicate with the Internet. In an example, the transmission device 106 may be a Radio Frequency (RF) module, which is configured to communicate with the Internet wirelessly.

In the present embodiment, a method for establishing a path performed on the terminal is provided. Fig. 2 is a flowchart of the method for establishing a path according to an embodiment of the present invention. As shown in Fig. 2, the flow includes the following steps.

At S202, on a first node in a path from an ingress node to an egress node, an incoming label and/or an outgoing label of a host FEC of the egress node is taken as the incoming label and/or outgoing label of a parasitic FEC of the egress node, and an MPLS LSP corresponding to the parasitic FEC is established.

Through the embodiments of the present invention, the incoming label and/or the outgoing label of the host FEC is borrowed when the MPLS LSP corresponding to the parasitic FEC is established, the number of the labels needing to be distributed during establishing the MPLS LSP corresponding to the FEC is reduced, the label resources are saved, and an MPLS LSP establishing efficiency is improved.

The host FEC and the parasitic FEC are only an accessing party and a lending party of the incoming label and/or the outgoing label, and have no real difference on other attributes. The host FEC and the parasitic FEC may also be called the first FEC and the second FEC for differentiation.

In an embodiment, the method may further include: when the first node is not the ingress node, a first message is sent to an upstream node of the first node, herein the first message carries information identifying a label borrowing relationship between the host FEC and the parasitic FEC; the label borrowing relationship is used for taking the incoming label and/or the outgoing label of the host FEC as the incoming label and/or the outgoing label of the parasitic FEC, so as to make the upstream node determine, according to the first message, the label borrowing relationship between the host FEC and the parasitic FEC, and establish the MPLS LSP corresponding to the parasitic FEC. The first message may be sent before or after the MPLS LSP corresponding to the parasitic FEC is established. The first message may be the existing label notification or recycle message, and may also be other messages except the label notification or recycle message.

Through the above technical solution of the embodiments of the present invention, the first node may transfer, through the first message, the label borrowing relationship between the host FEC and the parasitic FEC of the egress node to the upstream node, so that the label borrowing relationship between the host FEC and the parasitic FEC of the egress node may be transferred in the network, thereby improving a spreading efficiency of the label borrowing relationship between the host FEC and the parasitic FEC of the egress node.

In an embodiment, before the first message is sent to the upstream node of the first node, the label borrowing relationship between the host FEC and the parasitic FEC may also be determined. When the first node is the egress node, the label borrowing relationship between the host FEC and the parasitic FEC is determined according to a predetermined policy.
When the first node is not the egress node, the label borrowing relationship between the host FEC and the parasitic FEC is determined by means of receiving a notification message corresponding to the host FEC of the egress node. Of course, the label borrowing relationship between the host FEC and the parasitic FEC may be determined by means of receiving other messages except a label notification message or a label recycle message. The predetermined policy may be set according to the need. For example, the predetermined policy is set, according to the need, as all the parasitic FECs borrow (or do not borrow) the incoming label and/or the outgoing label of the host FEC. For another example, the predetermined policy is set, according to the need, as a part of specified parasitic FECs borrow (or do not borrow) the incoming label and/or the outgoing label of the host FEC.

Through the above technical solution of the embodiments of the present invention, different types of nodes use different ways to acquire the label borrowing relationship, which may be adapted to the node architecture in the entire network, thereby improving an efficiency of determining the label borrowing relationship between the host FEC and the parasitic FEC.

In an embodiment, the label borrowing relationship between the host FEC and the parasitic FEC is determined by means of receiving the notification message corresponding to the host FEC of the egress node in many ways, for example, by receiving the notification message sent by the downstream node of the first node, herein the notification message includes the host FEC corresponding to a route prefix for identifying the egress node, and the parasitic FEC borrowing (or not borrowing) the label of the host FEC. According to the notification message, the label borrowing relationship is determined as the incoming label and/or the outgoing label of the host FEC in the notification message is taken as the incoming label and/or the outgoing label of the parasitic FEC in the notification message. For another example, one or more flooding messages for notifying the route prefix of the egress node may be received. The flooding message may carry a host route prefix for identifying the egress node, or a parasitic route prefix matching with the host route prefix, and may also carry both the host route prefix for identifying the egress node and the parasitic route prefix matching with the host route prefix. The host route prefix corresponds to the host FEC, and the parasitic route prefix corresponds to the parasitic FEC. A second message which is sent by the downstream node of the first node and carries identification information for identifying the host FEC is received. According to the identification information, the label borrowing relationship is determined as: the incoming label and/or the outgoing label of the host FEC is taken as the incoming label and/or the outgoing label of the parasitic FEC, herein the parasitic FEC corresponds to the parasitic route prefix matching with the host route prefix. That is, a matching relationship between the host route prefix and the parasitic route prefix of the egress node is determined according to the flooding message, the host FEC is determined according to the second message, the parasitic route prefix matching with the host route prefix which corresponds to the host FEC is determined, and then the parasitic FEC borrowing the incoming label and/or the outgoing label of the host FEC is determined according to the parasitic route prefix, at this point, the notification message may include the flooding message and the second message.

Through the above technical solution of the embodiments of the present invention, by adopting the way of determining the label borrowing relationship according to the flooding message and the second message, the amount of information needing to be carried in a single notification message is reduced, and the efficiency of determining the label borrowing relationship is improved.

In an embodiment, after the label borrowing relationship between the host FEC and the parasitic FEC is determined by means of receiving the notification message corresponding to the host FEC of the egress node, the method may further include: according to the label borrowing relationship, label borrowing information which is saved locally and corresponds to the host FEC is updated. A first class of parasitic FECs borrowing the incoming label and/or the outgoing label of the host FEC may be determined according to the label borrowing relationship. Label borrowing information about that the parasitic FEC, which belongs to the first class of parasitic FECs, but does not borrow the incoming label and/or the outgoing label of the host FEC, borrows the incoming label and/or the outgoing label of the host FEC may be added according to the determined first class of parasitic FECs. And/or, according to the determined first class of parasitic FECs, label borrowing of the parasitic FEC, which does not belong to the first class of parasitic FECs, but has borrowed the incoming label and/or the outgoing label of the host FEC, is cancelled, and the LSP which is established by the parasitic FEC based on borrowing the incoming label and/or the outgoing label of the host FEC is deleted, herein the parasitic FEC does not belong to the first class of parasitic FECs, but has borrowed the incoming label and/or the outgoing label of the host FEC. As another solution, the label borrowing may also be performed by directly using the label borrowing relationship determined according to the second message instead of saving locally the label borrowing information corresponding to the host FEC, but this may lead to a situation where the parasitic FEC which is not allowed to borrow the incoming label and/or the outgoing label of the host FEC still borrows the incoming label and/or the outgoing label of the host FEC.

Through the above technical solution of the embodiments of the present invention, by updating, according to the label borrowing relationship, the label borrowing information which is saved locally and corresponds to the host FEC may ensure the label borrowing accuracy, and avoid the waste of network resource.

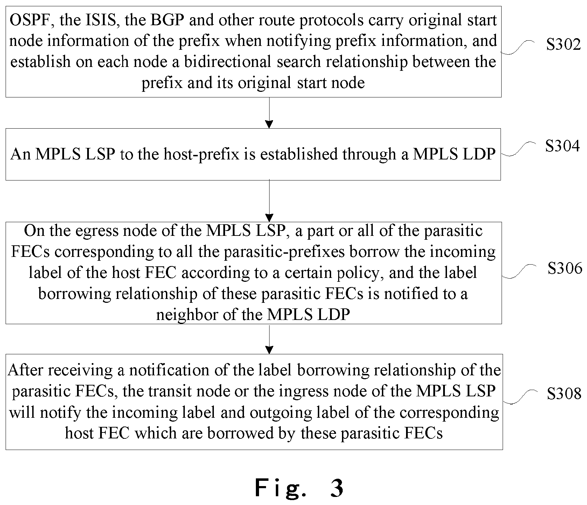

Based on the above embodiment and implementation mode, in order to illustrate the whole process interaction of the solution, in the present embodiment, a method for establishing a path is provided. Fig. 3 is a flowchart of the method for establishing a path according to an embodiment of the present invention. As shown in Fig. 3, the flow includes the following steps.

At S302, the OSPF, the ISIS, the BGP and other route protocols carry original start node information of the prefix when notifying prefix information, and establish on each node a bidirectional search relationship between the prefix and its original start node.

The original start node information of each node is generally a certain loopback address route of this node, which is called host-prefix. Some other local route may also be specified as the host-prefix. When notifying the prefix to other route protocol neighbor nodes, the node carries its host-prefix attribute. The prefix which is notified to the other route protocol neighbor nodes by the node also includes the host-prefix itself, and the host-prefix attribute is also carried when the host-prefix is notified. Moreover, except the host-prefix itself, the notified prefix may also include the prefix carrying the host-prefix attribute, which is called parasitic-prefix.

At S304, the MPLS LSP to the host-prefix is established through a MPLS LDP.

The MPLS LSP to the host-prefix is established through a MPLS LDP, correspondingly a destination FEC is called host FEC.

At S306, on the egress node of the MPLS LSP, a part or all of the parasitic FECs corresponding to all the parasitic-prefixes borrow the incoming label of the host FEC according to a certain policy, and the label borrowing relationship of these parasitic FECs is notified to a neighbor of the MPLS LDP.

The certain policy may be a coarse granularity policy or a fine granularity policy. The coarse granularity policy is that the parasitic FECs corresponding to all the parasitic-prefixes which take the host-prefix as the original start node will borrow the label of the corresponding host FEC. The fine granularity policy is that the parasitic FECs corresponding to a part of the parasitic-prefixes will explicitly borrow the label of the corresponding host FEC.

At S308, after receiving a notification of the label borrowing relationship of the parasitic FECs, the transit node or the ingress node of the MPLS LSP will notify the incoming label and outgoing label of the corresponding host FEC which are borrowed by these parasitic FECs.

The transit node of the MPLS LSP will continue to notify the label borrowing relationship of these parasitic FECs to the neighbor node of the MPLS LDP. At last, the corresponding MPLS LSP is established for these parasitic FECs in the entire network.

The flow of path establishment of the present embodiment is illustrated below.

In the present embodiment, the MPLS LSP is established by generating a host-parasitism FEC relationship. In order to establish the MPLS LSP, a TLV and a message are introduced in the present embodiment, namely a host-parasitism FEC relationship TLV and a label borrowing message.

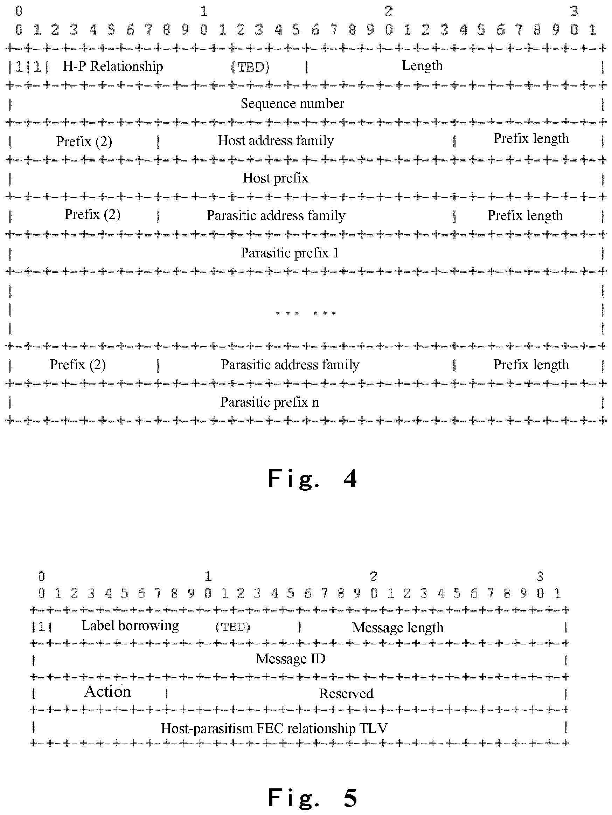

Fig. 4 shows a format of the host-parasitism FEC relationship TLV. In the format,
both U-bit and F-bit are set to be 1, so that the node which does not know the TLV directly ignores it and continues to spread it to other neighbors;
sequence number represents the sequence number of the label borrowing relationship, which is a 32-bit unsigned integer. When the label borrowing relationship is spread on many nodes in the network, a timing problem easily happens. The sequence number will decide which label borrowing relationship is new, and which is old. When two sequence numbers are compared, the larger sequence number represents the newer label borrowing relationship; but if the difference value between the larger sequence number and the smaller sequence number is more than a half of the value range of the 32-bit unsigned integer, overturn happens, at this point, the smaller sequence number represents the newer label borrowing relationship.

Both the host FEC and the parasitic FEC are the FEC of the prefix type which is defined according to RFC5036. The host FEC is a label lending party, and the parasitic FEC is a label borrowing party.

The TLV may be included in the existing label notification and label recycle message of the LDP, and may also be included in the label borrowing message defined by the embodiments of the present invention.

Fig. 5 shows a format of the label borrowing message. In the format,
the U-bit is set to be 1, so that the node which does not know the message directly ignores it;
if Action is set to be 0, the label is not borrowed; if Action is set to be 1, the label is borrowed.

The next is the Host-parasitism FEC Relationship TLV.

The process flow of the host-parasitism FEC relationship is illustrated below, and the involved ingress, transit, egress and so on aim at the host FEC.

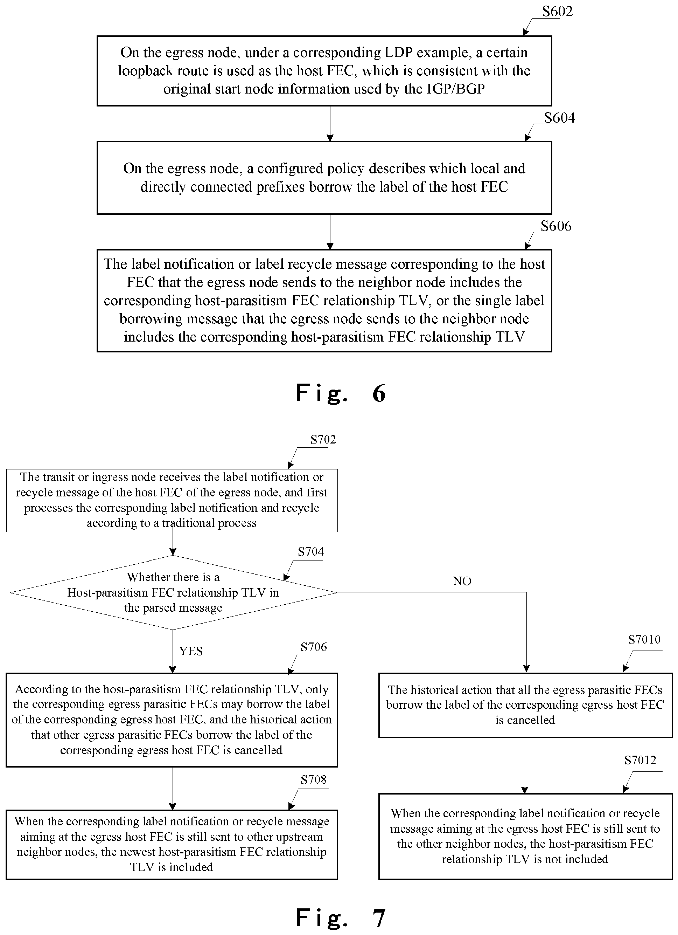

Fig. 6 is a processing flowchart showing that the egress node generates the host-parasitism FEC relationship according to an embodiment of the present invention. As shown in Fig. 6, the flow includes the following steps.

At S602, on the egress node, under a corresponding LDP example, a certain loopback route is used as the host FEC, which is consistent with the original start node information used by the IGP/BGP.

The LDP example only needs to distribute the label for the host FEC and notify it to the neighbor, and establish the corresponding MPLS LSP.

At S604, on the egress node, a configured policy describes which local and directly connected prefixes borrow the label of the host FEC.

The configured policy may include:
1) for the fine granularity, all the parasitic FECs want to (or do not want to) borrow the label of the host FEC;
2) for the coarse granularity, which parasitic FECs are specified to want to (or not want to) borrow the label of the host FEC.

At S606, the label notification or label recycle message corresponding to the host FEC that the egress node sends to the neighbor node includes the corresponding host-parasitism FEC relationship TLV, or the single label borrowing message that the egress node sends to the neighbor node includes the corresponding host-parasitism FEC relationship TLV.

Herein,
if the label of the host FEC is valid, and it is configured that the parasitic FECs need to borrow the label of the host FEC, when the egress node sends the label notification message corresponding to the host FEC to the neighbor node, the message includes the host-parasitism FEC relationship TLV. When it is the coarse granularity policy, only the information about the host FEC is provided in the host-parasitism FEC Relationship TLV, and there is no the information about the parasitic FEC. When it is the fine granularity policy, the information about the host FEC and multiple pieces of information about the parasitic FEC are provided in the host-parasitism FEC Relationship TLV.

If the label of the host FEC is valid, and the configuration that the parasitic FECs borrow the label of the host FEC is deleted, when the egress node sends the label notification message corresponding to the host FEC to the neighbor node, the message may not include the host-parasitism FEC relationship TLV.

If the label of the host FEC is invalid, and it is configured that the parasitic FECs need to borrow the label of the host FEC, when the egress node sends the label recycle message corresponding to the host FEC to the neighbor node, the message includes the host-parasitism FEC relationship TLV. When it is the coarse granularity policy, only the information about the host FEC is provided in the host-parasitism FEC Relationship TLV, and there is no the information about the parasitic FEC. When it is the fine granularity policy, the information about the host FEC and multiple pieces of information about the parasitic FEC are provided in the host-parasitism FEC Relationship TLV.

If the label of the host FEC is valid, and the configuration that the parasitic FECs borrow the label of the host FEC is deleted, when the egress node sends the label recycle message corresponding to the host FEC to the neighbor node, the message may not include the host-parasitism FEC relationship TLV.

The egress node may also send the single label borrowing message (whose format is shown in Fig. 5) to the neighbor node, herein the label borrowing message includes the corresponding Host-parasitism FEC Relationship TLV. Herein,

if it is configured that the parasitic FECs need to borrow the label of the host FEC, the egress node sends the label borrowing message to the neighbor node. Action is set to be 1, and includes the Host-parasitism FEC Relationship TLV. When it is the coarse granularity policy, only the information about the host FEC is provided in the host-parasitism FEC Relationship TLV, and there is no the information about the parasitic FEC. When it is the fine granularity policy, the information about the host FEC and multiple pieces of information about the parasitic FEC are provided in the host-parasitism FEC Relationship TLV.

If the configuration that the parasitic FECs borrow the label of the host FEC is deleted, the egress node sends the label borrowing message to the neighbor node. Action is set to be 0, and includes the Host-parasitism FEC Relationship TLV. Only the information about the host FEC is provided, and there is no the information about the parasitic FEC.

Fig. 7 is a processing flowchart showing that an ingress/transit node receives the host-parasitism FEC relationship from a label notification or a recycle message according to an embodiment of the present invention. As shown in Fig. 7, the flow includes the following steps.

At S702, the transit or ingress node receives the label notification or recycle message of the host FEC of the egress node, and first processes the corresponding label notification and recycle according to a traditional process.

At S704, it is determined whether there is the host-parasitism FEC relationship TLV in a parsed message; if so, S706 is performed; or else, S7010 is performed.

At S706, according to the host-parasitism FEC relationship TLV, only the corresponding egress parasitic FECs may borrow the label of the corresponding egress host FEC, and the historical action that other egress parasitic FECs borrow the label of the corresponding egress host FEC is cancelled.

If there is the host-parasitism FEC relationship TLV in the message, according to the label borrowing relationship represented by the TLV, only the corresponding egress parasitic FECs included in the TLV are allowed to borrow the label of the corresponding egress host FEC, the historical action that other egress parasitic FECs borrow the label of the corresponding egress host FEC is cancelled, and the LSPs, based on borrowing the label, of these egress parasitic FECs are deleted. The premise of the above cancelling and deleting operations is that the content of the host-parasitism FEC relationship TLV in the message is newer than locally saved data about that the corresponding egress parasitic FECs borrow the corresponding egress host FEC, which is determined through the sequence number in the host-parasitism FEC relationship TLV.

When there are multiple downstream neighbor nodes, it is determined through the sequence number in the host-parasitism FEC relationship TLV that the label borrowing relationship notified by which downstream neighbor node is the newest. If some downstream neighbor nodes include the host-parasitism FEC relationship TLV in the label notification or recycle message, but some other downstream neighbor nodes do not, at this point, relying on newest host-parasitism FEC relationship TLV, it is considered that there is the label borrowing relationship aiming at the corresponding host FEC; only when all the downstream neighbor nodes do not include the host-parasitism FEC relationship TLV in the label notification or recycle message, it is considered that there is no longer the label borrowing relationship aiming at the corresponding host FEC.

The newest data about that the corresponding egress parasitic FECs borrow the corresponding egress host FEC is always saved locally.

At S708, when the corresponding label notification or recycle message aiming at the egress host FEC is still sent to other upstream neighbor nodes, the newest host-parasitism FEC relationship TLV is included.

When an establishment mode of the MPLS LSP is independent, even receiving the label recycle message of the downstream neighbor node, the transit node will not continue sending the corresponding label recycle message to the upstream neighbor node, at this point, it is needed to determine whether the content of the host-parasitism FEC relationship TLV in the label recycle message which is received from the downstream neighbor node is newer than and consistent with the locally saved data about that the corresponding egress parasitic FECs borrow the corresponding egress host FEC; if so, the corresponding label notification message is generated, and it includes the host-parasitism FEC relationship TLV received from the downstream neighbor node. The label notification message is sent to the upstream neighbor node.

Whether the establishment mode of the MPLS LSP is independent or order, when all the transit nodes determine whether the content of the host-parasitism FEC relationship TLV in the label notification message which is received from the downstream neighbor node is newer than and consistent with the locally saved data about that the corresponding egress parasitic FECs borrow the corresponding egress host FEC, it is needed to generate the corresponding label notification message, and it includes the host-parasitism FEC relationship TLV received from the downstream neighbor node. The label notification message is sent to the upstream neighbor node.

When transferring, in case of no valid label distributed, the newer host-parasitism FEC relationship TLV to the upstream neighbor node aiming at the egress host FEC, the transit node may send the label recycle message with the invalid label to the upstream neighbor node, herein the label recycle message includes the corresponding host-parasitism FEC relationship TLV.

At S7010, the historical action that all the egress parasitic FECs borrow the label of the corresponding egress host FEC is cancelled.

If there is no the host-parasitism FEC relationship TLV in the message, it is determined whether all the downstream neighbor nodes do not include the host-parasitism FEC relationship TLV in the label notification or recycle message. If the determination result is yes, it is considered that there is no longer the label borrowing relationship aiming at the corresponding host FEC. At this point, the historical action that all the egress parasitic FECs borrow the label of the corresponding egress host FEC is cancelled, and the LSPs, based on borrowing the label, of the corresponding egress parasitic FECs are deleted.

It is to be noted that it is considered that the label borrowing relationship aiming at the corresponding host FEC still exists as long as there is any other downstream neighbor node including the host-parasitism FEC relationship TLV in the label notification or recycle message.

At S7012, when the corresponding label notification or recycle message aiming at the egress host FEC is still sent to the other neighbor nodes, the host-parasitism FEC relationship TLV is not included.

When there is no longer the label borrowing relationship aiming at the corresponding host FEC, the corresponding label notification or recycle message aiming at the egress host FEC which is still sent to the other upstream neighbor nodes will no longer include the host-parasitism FEC relationship TLV.

When needing to transfer, in case of no valid label distributed, that there is no longer the label borrowing relationship aiming at the corresponding host FEC to the upstream neighbor node, the transit node may send the label recycle message with the invalid label to the upstream neighbor node, herein the label recycle message does not include the corresponding host-parasitism FEC relationship TLV.

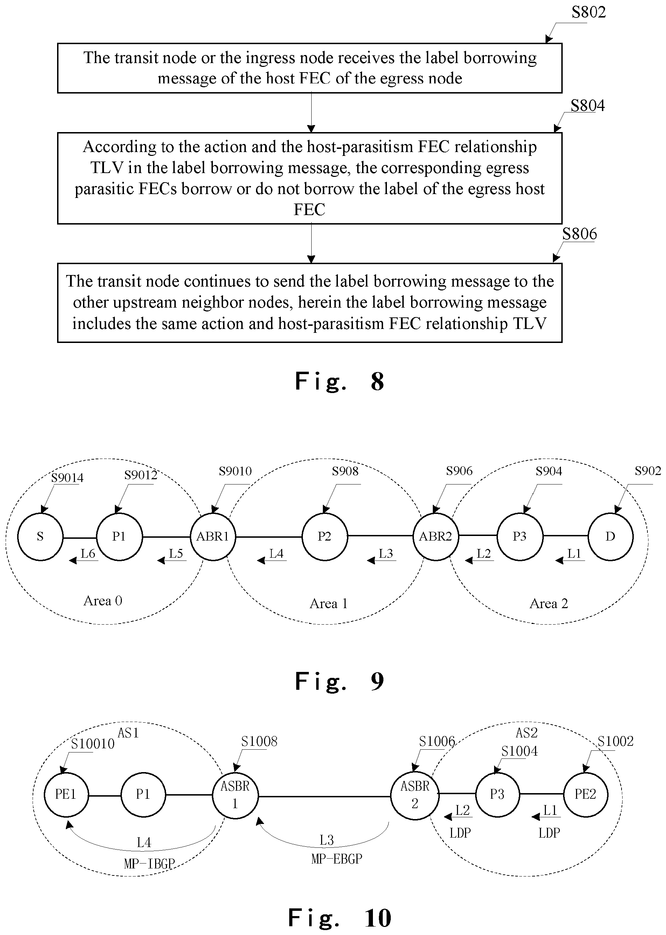

Fig. 8 is a processing flowchart showing that the ingress/transit node receives the host-parasitism FEC relationship from the label borrowing message according to an embodiment of the present invention. As shown in Fig. 8, compared with the manner of carrying the host-parasitism FEC relationship in the existing label notification or recycle message, the flow is very simple. The flow includes the following steps.

At S802, the transit node or the ingress node receives the label borrowing message of the host FEC of the egress node.

At S804, according to the action and the host-parasitism FEC relationship TLV in the label borrowing message, the corresponding egress parasitic FECs borrow or do not borrow the label of the egress host FEC.

The premise of the above operation is that the content of the host-parasitism FEC relationship TLV in the message is newer than locally saved data about that the corresponding egress parasitic FECs borrow the corresponding egress host FEC, which is determined through the sequence number in the host-parasitism FEC relationship TLV.

When there are multiple downstream neighbor nodes, it is determined through the sequence number in the host-parasitism FEC relationship TLV that the label borrowing relationship notified by which downstream neighbor node is the newest.

The newest data about that the corresponding egress parasitic FECs borrow the corresponding egress host FEC is always saved locally.

At S806, the transit node continues to send the label borrowing message to the other upstream neighbor nodes; herein the label borrowing message includes the same action and host-parasitism FEC relationship TLV.

The premise of the above operation is that the locally saved newest data about that the corresponding egress parasitic FECs borrow the corresponding egress host FEC changes.

The method for establishing a path of the present embodiment is illustrated below in combination with multiple MPLS LDPs.

Fig. 9 is a flowchart of establishing an LDP LSP according to an embodiment of the present invention. As shown in Fig. 9, the OSPF and LDP protocols run in the network, and the OSPF crosses over three areas. S, as the ingress node, establishes the LDP LSP to the egress node D. The flow includes the following steps.

At S902, there is a route of loopback0 and other local routes prefix1, prefix2, ..., and prefixn on the node D. It is assumed that the router-id of the node D is an IP address of the loopback0. The node D floods the prefix-loopback0, the prefix1, the prefix2, ..., and the prefixn in the entire network through the OSPF, and each prefix carries the prefix attribute in which the information router-id about the original start node of the prefix is described. The loopback0 mentioned below refers in particular to the loopback0 of the node D.

All the nodes in the network will generate the routes to the prefix-loopback0, the prefix1, the prefix2, ..., and the prefixn. By taking the node S for example, all next hops of the routes to the prefix-loopback0, the prefix1, the prefix2, ..., and the prefixn on the node S point to P1, and it is known that all the start nodes of these prefixes are router-id ABR1, but it is also known that all the original start nodes of these prefixes are router-id D.

The node D notifies label mapping (FEC-loopback0, L1) to the node P3 through the LDP.

At the same time, the route corresponding to the host FEC which is the loopback0 is configured on the node D; the coarse granularity policy is configured to make all the local prefixes borrow the label of the FEC-loopback0; and it is configured that the label borrowing relationship is notified to the neighbor by means of notifying the label borrowing message. Then, on the node D, the label L1 is also taken as the incoming label of FEC-prefix1, FEC-prefix2, ..., and FEC-prefixn, a corresponding LDP egress LSP is generated, and the label borrowing message is notified to the node P3 through the LDP. Action is set to be 1, and the host-parasitism FEC relationship TLV only includes the host prefix which is prefix-loopback0.

At S904, the node P3 receives the label mapping (FEC-loopback0, L1) message of the node D while distributing the incoming label L2 for the FEC-loopback0 orderly or independently.

If the node P3 also receives from the node D a coarse granularity label borrowing message aiming at the FEC-loopback0, the node P3 queries, in a route table, any prefixes whose original start node information is the router-id D, namely being able to match with the route of the prefix-loopback0, and route forwarding information of these prefixes needs to be consistent with that of the prefix-loopback0, and all the FECs corresponding to these prefixes will inherit the incoming label and the outgoing label from the FEC-loopback0, and respectively establish the corresponding LDP transit LSP.

The node P3 continues to notify, through the LDP, the label mapping (FEC-loopback0, L2) message to the node ABR2, and also notifies the label borrowing message. Action is set to be 1, the host-parasitism FEC relationship TLV only includes the host prefix which is prefix-loopback0.

At S906, the processing of the node ABR2 is similar to that of the node P3. At last, on the node ABR2, the LDP transit LSP is established for the FEC-prefix1, the FEC-prefix2, ..., and the FEC-prefixn based on the borrowed LDP incoming label and outgoing label, and the label mapping (FEC-loopback0, L3) message is still notified to the node P2 through the LDP, and the label borrowing message is also notified. Action is set to be 1, the host-parasitism FEC relationship TLV only includes the host prefix which is prefix-loopback0.

At S908, the processing of the node P2 is similar to that of the node P3. At last, on the node P2, the LDP transit LSP is established for the FEC-prefix1, the FEC-prefix2, ..., and the FEC-prefixn based on the borrowed LDP incoming label and outgoing label, and the label mapping (FEC-loopback0, L4) message is still notified to the node ABR1 through the LDP, and the label borrowing message is also notified. Action is set to be 1, the host-parasitism FEC relationship TLV only includes the host prefix which is prefix-loopback0.

At S901 0, the processing of the node ABR1 is similar to that of the node P3. At last, on the node ABR1, the LDP transit LSP is established for the FEC-prefix1, the FEC-prefix2, ..., and the FEC-prefixn based on the borrowed LDP incoming label and outgoing label, and the label mapping (FEC-loopback0, L5) message is still notified to the node P1 through the LDP, and the label borrowing message is also notified. Action is set to be 1, the host-parasitism FEC relationship TLV only includes the host prefix which is prefix-loopback0.

At S9012, the processing of the node P1 is similar to that of the node P3. At last, on the node P1, the LDP transit LSP is established for the FEC-prefix1, the FEC-prefix2, ..., and the FEC-prefixn based on the borrowed LDP incoming label and outgoing label, and the label mapping (FEC-loopback0, L6) message is still notified to the node S through the LDP, and the label borrowing message is also notified. Action is set to be 1, the host-parasitism FEC relationship TLV only includes the host prefix which is prefix-loopback0.

At S9014, the processing of the node S is similar to that of the node P3. At last, on the node S, an LDP ingress LSP is established for the FEC-prefix1, the FEC-prefix2, ..., and the FEC-prefixn based on the borrowed LDP outgoing label.

Fig. 10 is a flowchart of establishing a BGP LSP according to an embodiment of the present invention. As shown in Fig. 10, in a L3VPN cross-domain option C scenario, the OSPF and LDP protocols run in an Autonomous System (AS), and a BGP route with a label is notified between the ASs through a Multi-Protocol External Border Gateway Protocol (MP-EBGP), and the BGP route with a label learned from the other AS is notified in the AS through a Multi-Protocol Internal Border Gateway Protocol (MP-IBGP). PE1, as the ingress node, establishes the BGP LSP to the egress node PE2. The flow includes the following steps.

At S1002, there is the route of the loopback0 and other local routes prefix1, prefix2, ..., and prefixn on the node PE2. It is assumed that the router-id of the node PE2 is the IP address of the loopback0. The node PE2 floods in AS2 the prefix-loopback0, the prefix1, the prefix2, ..., and the prefixn in the entire network through the OSPF, and each prefix carries the prefix attribute in which the original start node information router-id PE2 of the prefix is described. The loopback0 mentioned below refers in particular to the loopback0 of the node PE2.

All the nodes in AS2 will generate the routes to the prefix-loopback0, the prefix1, the prefix2, ..., and the prefixn. By taking the node ASBR2 for example, all the next hops of the routes, on the node ASBR2, to the prefix-loopback0, the prefix1, the prefix2, ..., and the prefixn point to the node P3, and the original start nodes of these prefixes are router-id PE2.

The node PE2 notifies the label mapping (FEC-loopback0, L1) to the node P3 through the LDP.

At the same time, the route corresponding to the host FEC which is the loopback0 is configured on the node PE2; the coarse granularity policy is configured to make all the local prefixes borrow the label of the FEC-loopback0; and it is configured that the label borrowing relationship is notified to the neighbor by means of notifying the label borrowing message. Then, on the node PE2, the label L1 is also taken as the incoming label of the FEC-prefix1, the FEC-prefix2, ..., and the FEC-prefixn, the corresponding LDP egress LSP is generated, and the label borrowing message is notified to the node P3 through the LDP. Action is set to be 1, and the host-parasitism FEC relationship TLV only includes the host prefix which is the prefix-loopback0.

At S1004, the node P3 receives the label mapping (FEC-loopback0, L1) message of the node PE2 while distributing the incoming label L2 for the FEC-loopback0 orderly or independently.

If the node P3 also receives from the node PE2 the coarse granularity label borrowing message aiming at the FEC-loopback0, the node P3 queries, in the route table, any prefixes whose original start node information is the router-id PE2, namely being able to match with the route of the prefix-loopback0, and the route forwarding information of these prefixes needs to be consistent with that of the prefix-loopback0, and all the FECs corresponding to these prefixes will inherit the incoming label and the outgoing label from the FEC-loopback0, and establish the corresponding LDP transit LSP.

The node P3 continues to notify, through the LDP, the label mapping (FEC-loopback0, L2) message to the node ASBR2, and also notifies the label borrowing message. Action is set to be 1, the host-parasitism FEC relationship TLV only includes the host prefix which is prefix-loopback0.

At S1006, the processing of the node ASBR2 is similar to that of the node P3. At last, on the node ASBR2, the LDP ingress LSP is established for the FEC-prefix1, the FEC-prefix2, ..., and the FEC-prefixn based on the borrowed LDP outgoing label.

At the same time, on the node ASBR2, the OSPF prefix is imported in the BGP. When the OSPF prefix is imported, the prefix attributed describing the original start node information of each prefix is not lost . The node ASBR2 continues to notify, through the BGP, the BGP route with a label prefix-loopback0 to the node ASBR1, in which a label attribute and the host-parasitism FEC relationship TLV are included. The label attribute describes a label mapping relationship (FEC-loopback0, L3), and the host-parasitism FEC relationship TLV describes the label borrowing relationship of coarse granularity. The TLV only includes the host prefix which is the prefix-loopback0. The node ASBR2 also continues to notify, through the BGP, the BGP routes with a label prefix1, prefix2, ..., and prefixn to the node ASBR1, in which the label attribute is included. The label attribute describes the label mapping relationship (FEC-prefix1, L3).

On the node ASBR2, the BGP egress LSP is established for the FEC-prefix1, the FEC-prefix2, ..., and the FEC-prefixn based on the borrowed BGP incoming label. The BGP egress LSP is adhered with the LDP ingress LSP.

At S1008, after receiving the BGP route with a label prefix-loopback0 of the node ASBR2, the node ASBR1 also distributes the BGP incoming label L4 for the FEC-loopback0, at the same time, according to the label borrowing attribute included in the route notification in combination with the BGP routes with a label prefix1, prefix2, ..., and prefixn which are received from the node ASBR2, establishes the BGP transit LSP for the FEC-prefix1, the FEC-prefix2, ..., and the FEC-prefixn based on the borrowed BGP incoming label and outgoing label.

The node ASBR1 continues to notify, through the BGP, the BGP route with a label prefix-loopback0 to the node PE1, in which the label attribute and the host-parasitism FEC relationship TLV are included. The label attribute describes the label mapping relationship (FEC-loopback0, L4), and the host-parasitism FEC relationship TLV describes the label borrowing relationship of coarse granularity. The TLV only includes the host prefix which is the prefix-loopback0. The node ASBR1 also continues to notify, through the BGP, the BGP routes with a label prefix1, prefix2, ..., and prefixn to the node PE1, in which the label attribute is included. The label attribute describes the label mapping relationship (FEC-prefix1, L4).

At S10010, the processing of the node PE1 is similar to that of the node ASBR1. At last, on the node PE1, the BGP ingress LSP is established for the FEC-prefix1, the FEC-prefix2, ..., the FEC-prefixn based on the borrowed BGP outgoing label.

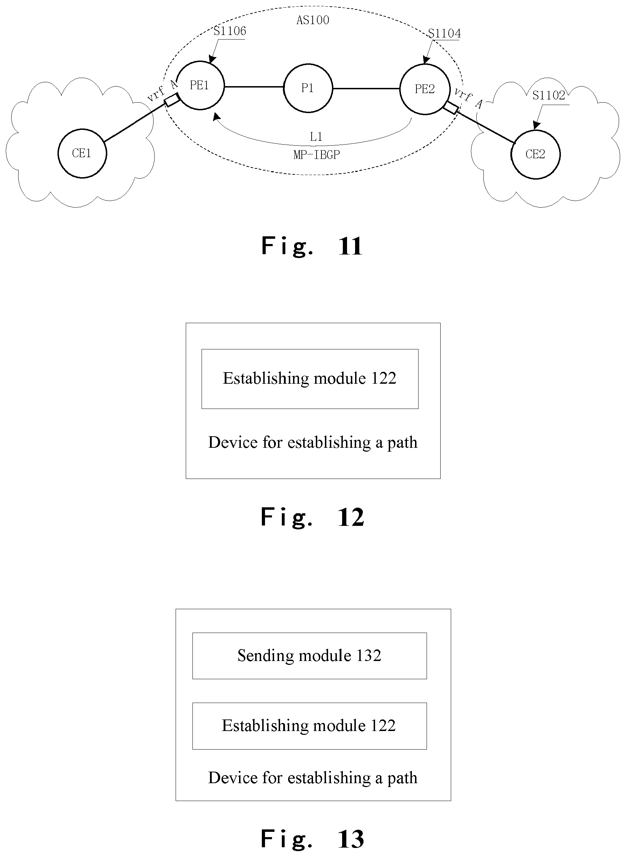

Fig. 11 is a flowchart of establishing the BGP LSP according to an embodiment of the present invention. As shown in Fig. 11, in a basic VPN scenario, the OSPF and LDP protocols run in the public network AS. The BGP VPNv4/6 route learned from a Customer Edge (CE) is also notified in the AS through the MP-IBGP. The OSPF protocol runs between the PE and the CE. The CE belongs to vrf A of the PE. The node PE1, as the ingress node, establishes a VPN LSP to the egress node which is the CE2. The flow includes the following steps.

At S1102, there is the route of the loopback0 and other local routes prefix1, prefix2, ..., and prefixn on the node CE2. It is assumed that the router-id of the CE2 is the IP address of the loopback0. The node CE2 floods the prefix-loopback0, the prefix1, the prefix2, ..., and the prefixn to the PE2 through the OSPF, and each prefix carries the prefix attribute in which the original start node information router-id CE2 of the prefix is described. The loopback0 mentioned below refers in particular to the loopback0 of the node CE2.

At S1104, the node PE2 will generate, in the vrf A, private network routes to the prefix-loopback0, the prefix1, the prefix2, ..., and the prefixn; all the next hops of the routes point to the CE2, and it is known that all the original start nodes of these prefixes are route-id CE2.

On the node PE2, a label borrowing policy of coarse granularity is configured for the vrf A to make all the prefixes in the vrf A borrow the labels of the FEC corresponding to their original start nodes; and it is configured that the label borrowing relationship is notified to the neighbor by means of notifying with the route.

The node PE2 notifies, through the BGP, a VPNv4 (or VPNv6) route prefix-loopback0 to the node PE1, in which the label mapping relationship (vrf A, FEC-loopback0, L1) attribute and the host-parasitism FEC relationship TLV are included, for describing the label borrowing relationship of coarse granularity. The TLV only includes the host prefix which is the prefix-loopback0. The node PE2 also notifies, through the BGP, the VPNv4 (or VPNv6) routes prefix1, prefix2, ..., and prefixn to the PE1, in which the label mapping relationship (vrf A, FEC-prefix1, L1) is included.

On the node PE2, the incoming labels FEC-prefix1, FEC-prefix2, ..., and FEC-prefixn are borrowed from the FEC-loopback0 corresponding to their original start nodes, namely the label L1, and the corresponding VPN egress LSP is generated.

At S1106, after receiving the VPNv4 (or VPNv6) route prefix-loopback0 notified by the node PE2, the node PE1 imports the local vrf A to generate the corresponding VPN ingress LSP. At the same time, according to the label borrowing attribute included in the route notification in combination with the VPNv4 (or VPNv6) routes prefix1, prefix2, ..., and prefixn which are received from the node PE2, the VPN ingress LSP is established for the FEC-prefix1, the FEC-prefix2, ..., and the FEC-prefixn in the vrf A based on the borrowed BGP outgoing label.

The embodiments of the present invention saves a large amount of label resources, and improves the efficiency of establishing the MPLS LSP.

Through the above description of the implementations, those skilled in the art may clearly know that the method according to the above embodiments may be implemented by means of software plus a necessary common hardware platform, certainly by means of hardware; but in many cases, the former is the better implementation. Based on this understanding, the embodiments of the present invention may be embodied in the form of software product; the computer software product is stored in a storage medium (for example, a Read-Only Memory (ROM)/RAM, a magnetic disk, and a compact disc) and includes a number of instructions to make a terminal device (which may be a mobile phone, a computer, a server or a network device, etc.) perform the method in each embodiment of the present invention.

### Embodiment two

The present embodiment provides device for establishing a path, which is configured to implement the above embodiments and preferred implementations. The embodiments which have been elaborated will not be repeated here. The term "module" used below can realize a combination of software and/or hardware with an intended function. Although the device described in the following embodiment is realized through software better, the realization through hardware or a combination of software and hardware is possible and conceived.

Fig. 12 is a first structure diagram of the device for establishing a path according to an embodiment of the present invention. As shown in Fig. 12, the device includes: an establishing module 122, which is configured to take, on the first node in the path from the ingress node to the egress node, the incoming label and/or the outgoing label of the host FEC of the egress node as the incoming label and/or the outgoing label of the parasitic FEC of the egress node, and establish the MPLS LSP corresponding to the parasitic FEC.

Fig. 13 is a second structure diagram of the device for establishing a path according to an embodiment of the present invention. As shown in Fig. 13, except all the modules shown in Fig. 12, the device further includes: a sending module 132, which is configured to send, when the first node is not the ingress node, the first message to the upstream node of the first node, herein the first message carries the information identifying the label borrowing relationship between the host FEC and the parasitic FEC; the label borrowing relationship is used for taking the incoming label and/or the outgoing label of the host FEC as the incoming label and/or the outgoing label of the parasitic FEC, so as to make the upstream node determine, according to the first message, the label borrowing relationship between the host FEC and the parasitic FEC, and establish the MPLS LSP corresponding to the parasitic FEC.

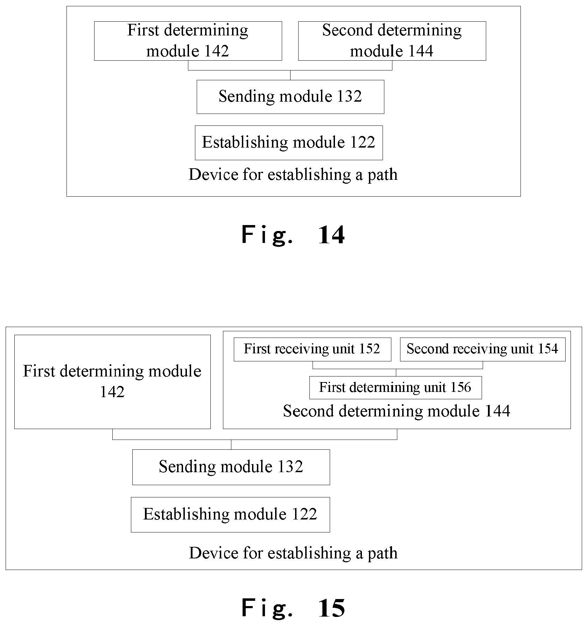

Fig. 14 is a third structure diagram of the device for establishing a path according to an embodiment of the present invention. As shown in Fig. 14, except all the modules shown in Fig. 13, the device further includes: a first determining module 142 or a second determining module 144.

The first determining module 142 is configured to determine, when the first node is the egress node, the label borrowing relationship between the host FEC and the parasitic FEC according to the predetermined policy. The second determining module 144 is configured to determine, when the first node is not the egress node, the label borrowing relationship between the host FEC and the parasitic FEC by means of receiving the notification message corresponding to the host FEC of the egress node.

Fig. 15 is a structure diagram of the second determining module 144 in the device for establishing a path according to an embodiment of the present invention. As shown in Fig. 15, the second determining module 144 includes: a first receiving unit 152, a second receiving unit 154, and a first determining unit 156.

The first receiving unit 152 is configured to receive one or more flooding messages for notifying the route prefix of the egress node, herein the flooding message carries the host route prefix and/or the parasitic route prefix of the egress node. The host route prefix is used for identifying the egress node, and corresponds to the host FEC. The parasitic route prefix matches with the host route prefix, and corresponds to the parasitic FEC.

The second receiving unit 154 is configured to receive the second message sent by the downstream node of the first node, herein the second message carries the identification information for identifying the host FEC.

The first determining unit 156 is connected with the first receiving unit 152 and the second receiving unit 154, and is configured to determine, according to the identification information and the route prefix of the egress node which is notified by the flooding message, the label borrowing relationship as: the incoming label and/or the outgoing label of the host FEC is taken as the incoming label and/or the outgoing label of the parasitic FEC, herein the parasitic FEC corresponds to the parasitic route prefix matching with the host route prefix.

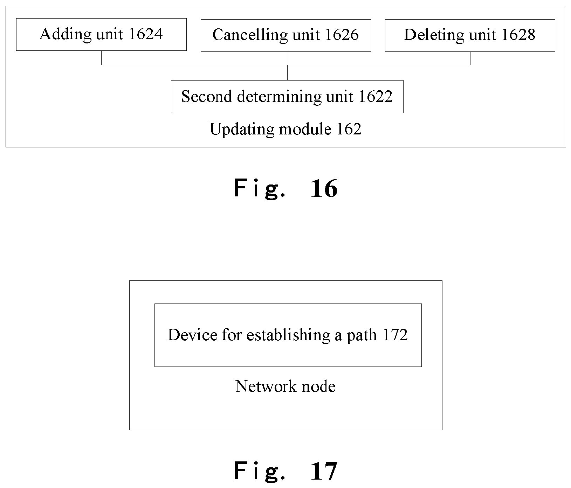

Fig. 16 is a third structure diagram of the device for establishing a path according to an embodiment of the present invention. As shown in Fig. 16, except all the modules shown in Fig. 12, the device further includes: an updating module 162, which is configured to update, according to the label borrowing relationship, the label borrowing information which is saved locally and corresponds to the host FEC. The updating module 162 includes a second determining unit 1622, an adding unit 1624, a cancelling unit 1626, and a deleting unit 1628.

The second determining unit 1622 is configured to determine, according to the label borrowing relationship, the first class of parasitic FECs borrowing the incoming label and/or the outgoing label of the host FEC.

The adding unit 1624 is connected with the second determining unit 1622, and is configured to add, according to the determined first class of parasitic FECs, the label borrowing information about that the parasitic FEC, which belongs to the first class of parasitic FECs, but does not borrow the incoming label and/or the outgoing label of the host FEC, borrows the incoming label and/or the outgoing label of the host FEC.

The cancelling unit 1626 is connected with the second determining unit 1622, and is configured to cancel, according to the determined first class of parasitic FECs, the label borrowing of the parasitic FEC which does not belong to the first class of parasitic FECs, but has borrowed the incoming label and/or the outgoing label of the host FEC.

The deleting unit 1628 is connected with the second determining unit 1622, and is configured to delete the LSP which is established by the parasitic FEC based on borrowing the incoming label and/or the outgoing label of the host FEC, herein the parasitic FEC does not belong to the first class of parasitic FECs, but has borrowed the incoming label and/or the outgoing label of the host FEC.

It is to be noted that, each of the above modules may be realized by software or hardware. For the latter, the each of the above modules may be realized by, but not limited to, the following way: all of the above modules are in the same processor; or, the above modules are respectively in different processors in form of any combination.

### Embodiment three

In the embodiments of the present invention, a network node is also provided. Fig. 17 is a structure diagram of the network node according to an embodiment of the present invention. As shown in Fig. 17, the network node includes the device for establishing a path 172 in the above embodiment.

### Embodiment four

The embodiments of the present invention also provide a storage medium. In the present embodiment, the storage medium may be configured to store program codes for performing the following step: on the first node in the path from the ingress node to the egress node, the incoming label and/or the outgoing label of the host FEC of the egress node is taken as the incoming label and/or the outgoing label of the parasitic FEC of the egress node, and the MPLS LSP corresponding to the parasitic FEC is established.

In an implementation mode, the storage medium is further configured to store the program codes for performing the following step: when the first node is not the ingress node, the first message is sent to the upstream node of the first node, herein the first message carries the information identifying the label borrowing relationship between the host FEC and the parasitic FEC; the label borrowing relationship is used for taking the incoming label and/or the outgoing label of the host FEC as the incoming label and/or the outgoing label of the parasitic FEC, so as to make the upstream node determine, according to the first message, the label borrowing relationship between the host FEC and the parasitic FEC, and establish the MPLS LSP corresponding to the parasitic FEC.

In an implementation mode, the storage medium is further configured to store the program codes for performing the following steps.

Before the first message is sent to the upstream node of the first node, the method further includes the following steps.

At S1, when the first node is the egress node, the label borrowing relationship between the host FEC and the parasitic FEC is determined according to the predetermined policy.

At S2, when the first node is not the egress node, the label borrowing relationship between the host FEC and the parasitic FEC is determined by means of receiving the notification message corresponding to the host FEC of the egress node.

In an implementation mode, the storage medium is further configured to store the program codes for performing the following steps.

The label borrowing relationship between the host FEC and the parasitic FEC is determined by means of receiving the notification message corresponding to the host FEC of the egress node may further include the following steps.

At S1, one or more flooding messages for notifying the route prefix of the egress node are received; herein the flooding message carries the host route prefix and the parasitic route prefix of the egress node. The host route prefix is used for identifying the egress node, and corresponds to the host FEC. The parasitic route prefix matches with the host route prefix, and corresponds to the parasitic FEC.

At S2, the second message sent by the downstream node of the first node is received; herein the second message carries the identification information for identifying the host FEC.

At S3, according to the identification information, the label borrowing relationship is determined as: the incoming label and/or the outgoing label of the host FEC is taken as the incoming label and/or the outgoing label of the parasitic FEC, herein the parasitic FEC corresponds to the parasitic route prefix matching with the host route prefix.

In an implementation mode, the storage medium is further configured to store the program codes for performing the following steps.

After the label borrowing relationship between the host FEC and the parasitic FEC is determined by means of receiving the notification message corresponding to the host FEC of the egress node, the method further includes: according to the label borrowing relationship, the label borrowing information which is saved locally and corresponds to the host FEC is updated.

At S1, according to the label borrowing relationship, the first class of parasitic FECs borrowing the incoming label and/or the outgoing label of the parasitic FEC are determined.

At S2, according to the determined first class of parasitic FECs, the label borrowing information about that the parasitic FEC, which belongs to the first class of parasitic FECs, but does not borrow the incoming label and/or the outgoing label of the host FEC, borrows the incoming label and/or the outgoing label of the host FEC is added.

At S3, according to the determined first class of parasitic FECs, the label borrowing of the parasitic FEC, which does not belong to the first class of parasitic FECs, but has borrowed the incoming label and/or the outgoing label of the host FEC, is cancelled, and the LSP which is established by the parasitic FEC based on borrowing the incoming label and/or the outgoing label of the host FEC is deleted, herein the parasitic FEC does not belong to the first class of parasitic FECs, but has borrowed the incoming label and/or the outgoing label of the host FEC.

In the present embodiment, the storage media may include, but not limited to, a USB flash disk, an ROM, an RAM, a mobile hard disk, a magnetic disk, a compact disc, and other media capable of storing the program codes.

In an implementation mode, in the present embodiment, a processor performs, according to the program codes stored in the storage medium, the following step: on the first node in the path from the ingress node to the egress node, the incoming label and/or the outgoing label of the host FEC of the egress node is taken as the incoming label and/or the outgoing label of the parasitic FEC of the egress node, and the MPLS LSP corresponding to the parasitic FEC is established.

In an implementation mode, in the present embodiment, the processor performs, according to the program codes stored in the storage medium, the following step: when the first node is not the ingress node, the first message is sent to the upstream node of the first node, herein the first message carries the information identifying the label borrowing relationship between the host FEC and the parasitic FEC; the label borrowing relationship is used for taking the incoming label and/or the outgoing label of the host FEC as the incoming label and/or the outgoing label of the parasitic FEC, so as to make the upstream node determine, according to the first message, the label borrowing relationship between the host FEC and the parasitic FEC, and establish the MPLS LSP corresponding to the parasitic FEC.

In an implementation mode, in the present embodiment, the processor performs, according to the program codes stored in the storage medium, the following step: before the first message is sent to the upstream node of the first node, when the first node is the egress node, the label borrowing relationship between the host FEC and the parasitic FEC is determined according to the predetermined policy; or when the first node is not the egress node, the label borrowing relationship between the host FEC and the parasitic FEC is determined by means of receiving the notification message corresponding to the host FEC of the egress node.

In an implementation mode, in the present embodiment, the processor performs, according to the program codes stored in the storage medium, the following step: the label borrowing relationship between the host FEC and the parasitic FEC is determined by means of receiving the notification message corresponding to the host FEC of the egress node, including: one or more flooding messages for notifying the route prefix of the egress node are received, herein the flooding message carries the host route prefix and/or the parasitic route prefix of the egress node; the host route prefix is used for identifying the egress node, and corresponds to the host FEC; the parasitic route prefix matches with the host route prefix, and corresponds to the parasitic FEC; the second message sent by the downstream node of the first node is received, herein the second message carries the identification information for identifying the host FEC; and according to the identification information and the route prefix of the egress node which is notified by the flooding message, the label borrowing relationship is determined as: the label of the host FEC is taken as the incoming label and/outgoing label of the parasitic FEC, herein the parasitic FEC corresponds to the parasitic route prefix matching with the host route prefix.

In an implementation mode, in the present embodiment, the processor performs, according to the program codes stored in the storage medium, the following step: after the label borrowing relationship between the host FEC and the parasitic FEC is determined by means of receiving the notification message corresponding to the host FEC of the egress node, the method may further include: according to the label borrowing relationship, the label borrowing information which is saved locally and corresponds to the host FEC is updated, including: the first class of parasitic FECs borrowing the incoming label and/or the outgoing label of the host FEC are determined according to the label borrowing relationship; the label borrowing information about that the parasitic FEC, which belongs to the first class of parasitic FECs, but does not borrow the incoming label and/or the outgoing label of the host FEC, borrows the incoming label and/or the outgoing label of the host FEC is added according to the determined first class of parasitic FECs; and/or, according to the determined first class of parasitic FECs, the label borrowing of the parasitic FEC, which does not belong to the first class of parasitic FECs, but has borrowed the incoming label and/or the outgoing label of the host FEC, is cancelled, and the LSP which is established by the parasitic FEC based on borrowing the incoming label and/or the outgoing label of the host FEC is deleted, herein the parasitic FEC does not belong to the first class of parasitic FECs, but has borrowed the incoming label and/or the outgoing label of the host FEC.

The examples in the present embodiment may refer to the examples described in the above embodiments and implementation modes, and will not be repeated here.

The above modules and steps of the embodiments of the present invention may be implemented by a general-purpose computing device, and they may be centralized in a single computing device or distributed on a network composed of multiple computing devices; they may be implemented by a program code which is capable of being executed by the computing device, so that they may be stored in a storage device and executed by the computing device; and in some situations, the presented or described steps may be executed in an order different from that described here; or they are made into integrated circuit modules, respectively; or multiple modules and steps of them are made into a single integrated circuit module to realize. Therefore, the embodiments of the present invention are not limited to any particular combination of hardware and software.

The above is only the preferred embodiments of the present invention and not intended to limit the present application; for those skilled in the art, the present application may have various modifications and changes, within the scope defined by the appended set of claims.

### Industrial Applicability

Through the embodiments of the present invention, the label of the host FEC is borrowed when the MPLS LSP corresponding to the parasitic FEC is established, and the number of the labels needing to be distributed during establishing the MPLS LSP corresponding to the FEC is reduced, so effects of saving the label resources and improving an MPLS LSP establishing efficiency are achieved.

## Claims

1. A method for establishing a path, comprising:
on a first node in a path from an ingress node to an egress node, taking a label of a host Forwarding Equivalence Class, FEC, of the egress node as the label of a parasitic FEC of the egress node to establish a label borrowing relationship between the host FEC and the parasitic FEC, and establishing a Multiprotocol Label Switching, MPLS, based Label Switched Path, LSP, corresponding to the parasitic FEC(S202);
wherein, the host FEC indicates label Lender and the parasitic FEC indicates label borrowing, and the host FEC of the egress node corresponds to a host route prefix of the egress node and the parasitic FEC corresponds to route prefixes originated from the egress node that borrows the label from the host FEC, wherein the label is an incoming label, an outgoing label, or a combination of the incoming label and the outgoing label.

2. The method as claimed in claim 1, further comprising:
when the first node is not the ingress node, sending a first message to an upstream node of the first node, wherein the first message carries information identifying a label borrowing relationship between the host FEC and the parasitic FEC; the label borrowing relationship is used for taking the label of the host FEC as the label of the parasitic FEC, so as to make the upstream node determine, according to the first message, the label borrowing relationship between the host FEC and the parasitic FEC, and establish the MPLS LSP corresponding to the parasitic FEC.

3. The method as claimed in claim 2, wherein before sending the first message to the upstream node of the first node, further comprising:
when the first node is the egress node, determining the label borrowing relationship between the host FEC and the parasitic FEC according to a predetermined policy; or,
when the first node is not the egress node, determining the label borrowing relationship between the host FEC and the parasitic FEC by means of receiving a notification message corresponding to the host FEC of the egress node.

4. The method as claimed in claim 3, wherein determining the label borrowing relationship between the host FEC and the parasitic FEC by means of receiving the notification message corresponding to the host FEC of the egress node comprises:
receiving one or more flooding messages for notifying a route prefix of the egress node, wherein the flooding message carries at least one of a host route prefix and a parasitic route prefix; the host route prefix is used for identifying the egress node, and corresponds to the host FEC; the parasitic route prefix matches with the host route prefix, and corresponds to the parasitic FEC;
receiving a second message sent by a downstream node of the first node, wherein the second message carries identification information for identifying the host FEC;
according to the identification information and the route prefix of the egress node which is notified by the flooding message, determining the label borrowing relationship as: the label of the host FEC is taken as the label of the parasitic FEC, wherein the parasitic FEC corresponds to the parasitic route prefix, and the parasitic route prefix matches with the host route prefix.

5. The method as claimed in claim 3 or 4, wherein after determining the label borrowing relationship between the host FEC and the parasitic FEC by means of receiving the notification message corresponding to the host FEC of the egress node, further comprising: according to the label borrowing relationship, updating label borrowing information which is saved locally and corresponds to the host FEC.

6. The method as claimed in claim 5, wherein according to the label borrowing relationship, updating the label borrowing information which is saved locally and corresponds to the host FEC comprises:
according to the label borrowing relationship, determining a first class of parasitic FECs which are allowed to borrow the label of the host FEC;
performing at least one of the following operations:
according to the determined first class of parasitic FECs, adding the label borrowing information about that the parasitic FEC, which belongs to the first class of parasitic FECs, but does not borrow the label of the host FEC, borrows the label of the host FEC;
according to the determined first class of parasitic FECs, cancelling label borrowing of the parasitic FEC which does not belong to the first class of parasitic FECs, but has borrowed the label of the host FEC, and deleting the LSP which is established by the parasitic FEC based on borrowing the label of the host FEC, wherein the parasitic FEC does not belong to the first class of parasitic FECs, but has borrowed the label of the host FEC.

7. A device comprising means for establishing a path, comprising:
an establishing module (122), which is configured to take, on a first node in a path from an ingress node to an egress node, a label of a host Forwarding Equivalence Class, FEC, of the egress node as the label of a parasitic FEC of the egress node to establish a label borrowing relationship between the host FEC and the parasitic FEC, and establish a Multiprotocol Label Switching, MPLS, based Label Switched Path, LSP, corresponding to the parasitic FEC;
wherein, the host FEC indicates label Lender and the parasitic FEC indicates label borrowing, and the host FEC of the egress node corresponds to a host route prefix of the egress node and the parasitic FEC corresponds to route prefixes originated from the egress node that borrows the label from the host FEC, wherein the label is an incoming label, an outgoing label, or a combination of the incoming label and the outgoing label.

8. The device as claimed in claim 7, further comprising:
a sending module(132), which is configured to send, when the first node is not the ingress node, a first message to an upstream node of the first node, wherein the first message carries information identifying a label borrowing relationship between the host FEC and the parasitic FEC; the label borrowing relationship is used for taking the label of the host FEC as the label of the parasitic FEC, so as to make the upstream node determine, according to the first message, the label borrowing relationship between the host FEC and the parasitic FEC, and establish the MPLS LSP corresponding to the parasitic FEC.

9. The device as claimed in claim 8, further comprising:
a first determining module(142), which is configured to determine, when the first node is the egress node, the label borrowing relationship between the host FEC and the parasitic FEC according to a predetermined policy; or,
a second determining module(144), which is configured to determine, when the first node is not the egress node, the label borrowing relationship between the host FEC and the parasitic FEC by means of receiving a notification message corresponding to the host FEC of the egress node.

10. The device as claimed in claim 9, wherein the second determining module (144) comprises:
a first receiving unit (152), which is configured to receive one or more flooding messages for notifying a route prefix of the egress node, wherein the flooding message carries at least one of a host route prefix and a parasitic route prefix; the host route prefix is used for identifying the egress node, and corresponds to the host FEC; the parasitic route prefix matches with the host route prefix, and corresponds to the parasitic FEC;
a second receiving unit (154), which is configured to receive a second message sent by a downstream node of the first node, wherein the second message carries identification information for identifying the host FEC; and
a first determining unit (156), which is configured to determine, according to the identification information and the route prefix of the egress node which is notified by the flooding message, the label borrowing relationship as: the label of the host FEC is taken as the label of the parasitic FEC, wherein the parasitic FEC corresponds to the parasitic route prefix, and the parasitic route prefix matches with the host route prefix.

11. The device as claimed in claim 10, further comprising:
an updating module (162), which is configured to update, according to the label borrowing relationship, label borrowing information which is saved locally and corresponds to the host FEC.

12. The device as claimed in claim 10, wherein,
the updating module (162) comprises:
a second determining unit (1622), which is configured to determine, according to the label borrowing relationship, a first class of parasitic FECs which are allowed to borrow the label of the host FEC;
the updating module (162) further comprises at least one of the following units:
an adding unit (1624), which is configured to add, according to the determined first class of parasitic FECs, the label borrowing information about that the parasitic FEC, which belongs to the first class of parasitic FECs, but does not borrow the label of the host FEC, borrows the label of the host FEC;
a cancelling unit (1626), which is configured to cancel, according to the determined first class of parasitic FECs, label borrowing of the parasitic FEC which does not belong to the first class of parasitic FECs, but has borrowed the label of the host FEC; and
a deleting unit (1628), which is configured to delete the LSP which is established by the parasitic FEC based on borrowing the label of the host FEC, wherein the parasitic FEC does not belong to the first class of parasitic FECs, but has borrowed the label of the host FEC.

13. A storage medium, being configured to store program codes for performing a method for establishing a path as claimed in any one of claims 1 to 6.

## Patentansprüche

1. Verfahren zum Herstellen eines Pfads, umfassend:
auf einem ersten Knoten in einem Pfad von einem Eingangsknoten zu einem Ausgangsknoten, Nehmen eines Labels einer Host-Weiterleitungsäquivalenzklasse, FEC, des Ausgangsknotens als das Label einer parasitären FEC des Ausgangsknotens, um eine Label-Ausleihebeziehung zwischen der Host-FEC und der parasitären FEC herzustellen, und Herstellen eines auf Multiprotocol Label Switching, MPLS, basierten Label Switched Path, LSP, der der parasitären FEC entspricht (S202);
wobei die Host-FEC einen Verleiher des Labels anzeigt und die parasitäre FEC eine Label-Ausleihe anzeigt, und die Host-FEC des Ausgangsknotens einem Host-Routenpräfix des Ausgangsknotens entspricht und die parasitäre FEC Routenpräfixen entspricht, die von dem Ausgangsknoten stammen, der das Label von der Host-FEC ausleiht, wobei das Label ein eingehendes Label, ein ausgehendes Label oder eine Kombination aus dem eingehenden Label und dem ausgehenden Label ist.

2. Verfahren nach Anspruch 1, ferner umfassend:
wenn der erste Knoten nicht der Eingangsknoten ist, Senden einer ersten Nachricht an einen Upstream-Knoten des ersten Knotens, wobei die erste Nachricht Informationen trägt, die eine Label-Ausleihebeziehung zwischen der Host-FEC und der parasitären FEC identifizieren; wobei die Label-Ausleihebeziehung zum Nehmen des Labels der Host-FEC als das Label der parasitären FEC verwendet wird, um den Upstream-Knoten zu veranlassen, gemäß der ersten Nachricht, die Label-Ausleihebeziehung zwischen der Host-FEC und der parasitären FEC zu bestimmen und den MPLS LSP herzustellen, der der parasitären FEC entspricht.

3. Verfahren nach Anspruch 2, wobei, vor dem Senden der ersten Nachricht an den Upstream-Knoten des ersten Knotens, ferner umfassend:
wenn der erste Knoten der Ausgangsknoten ist, Bestimmen der Label-Ausleihebeziehung zwischen der Host-FEC und der parasitären FEC gemäß einer zuvor bestimmten Richtlinie; oder,
wenn der erste Knoten nicht der Ausgangsknoten ist, Bestimmen der Label-Ausleihebeziehung zwischen der Host-FEC und der parasitären FEC mittels Empfangen einer Benachrichtigungsnachricht, die der Host-FEC des Ausgangsknotens entspricht.

4. Verfahren nach Anspruch 3, wobei das Bestimmen der Label-Ausleihebeziehung zwischen der Host-FEC und der parasitären FEC mittels Empfangen der Benachrichtigungsnachricht, die der Host-FEC des Ausgangsknotens entspricht, umfasst:
Empfangen einer oder mehrerer Flooding-Nachrichten zum Benachrichtigen eines Routenpräfixes des Ausgangsknotens, wobei die Flooding-Nachricht mindestens eines von einem Host-Routenpräfix und einem parasitären Routenpräfix trägt; das Host-Routenpräfix zum Identifizieren des Ausgangsknotens verwendet wird und der Host-FEC entspricht; das parasitäre Routenpräfix mit dem Host-Routenpräfix übereinstimmt und der parasitären FEC entspricht;
Empfangen einer zweiten Nachricht, die durch einen Downstream-Knoten des ersten Knotens gesendet wird, wobei die zweite Nachricht Identifikationsinformationen zum Identifizieren der Host-FEC trägt;
gemäß den Identifikationsinformationen und dem Routenpräfix des Ausgangsknotens, das durch die Flooding-Nachricht benachrichtigt wird, Bestimmen der Label-Ausleihebeziehung als: das Label der Host-FEC wird als das Label der parasitären FEC genommen, wobei die parasitäre FEC dem parasitären Routenpräfix entspricht und das parasitäre Routenpräfix mit dem Host-Routenpräfix übereinstimmt.

5. Verfahren nach Anspruch 3 oder 4, wobei, nach dem Bestimmen der Label-Ausleihebeziehung zwischen der Host-FEC und der parasitären FEC mittels Empfangen der Benachrichtigungsnachricht, die der Host-FEC des Ausgangsknotens entspricht, ferner umfassend: gemäß der Label-Ausleihebeziehung, Aktualisieren von Label-Ausleiheinformationen, die lokal gespeichert sind und der Host-FEC entsprechen.

6. Verfahren nach Anspruch 5, wobei gemäß der Label-Ausleihebeziehung das Aktualisieren der Label-Ausleiheinformationen, die lokal gespeichert sind und der Host-FEC entsprechen, umfasst:
gemäß der Label-Ausleihebeziehung, Bestimmen einer ersten Klasse von parasitären FECs, denen es erlaubt ist, das Label der Host-FEC auszuleihen;
Durchführen von mindestens einem der folgenden Abläufe:
gemäß der bestimmten ersten Klasse von parasitären FECs, Hinzufügen der Label-Ausleiheinformationen darüber, dass die parasitäre FEC, die zu der ersten Klasse von parasitären FECs gehört, aber nicht das Label der Host-FEC ausleiht, das Label der Host-FEC ausleiht;
gemäß der bestimmten ersten Klasse von parasitären FECs, Abbrechen der Label-Ausleihe der parasitären FEC, die nicht zu der ersten Klasse von parasitären FECs gehört, aber das Label der Host-FEC ausgeliehen hat, und Löschen des LSP, der durch die parasitäre FEC basierend auf dem Ausleihen des Labels der Hosts FEC hergestellt wird, wobei die parasitäre FEC nicht zu der ersten Klasse von parasitären FECs gehört, aber das Label der Host-FEC ausgeliehen hat.

7. Vorrichtung, umfassend Mittel zum Herstellen eines Pfads, umfassend:
ein Herstellungsmodul (122), das konfiguriert ist, um, auf einem ersten Knoten in einem Pfad von einem Eingangsknoten zu einem Ausgangsknoten, ein Label einer Host-Weiterleitungsäquivalenzklasse, FEC, des Ausgangsknotens als das Label einer parasitären FEC des Ausgangsknotens zu nehmen, um eine Label-Ausleihebeziehung zwischen der Host-FEC und der parasitären FEC herzustellen und einen auf Multiprotocol Label Switching, MPLS, basierten Label Switched Path, LSP, herzustellen, der der parasitären FEC entspricht;
wobei die Host-FEC den Verleiher des Labels anzeigt und die parasitäre FEC die Label-Ausleihe anzeigt, und die Host-FEC des Ausgangsknotens einem Host-Routenpräfix des Ausgangsknotens entspricht und die parasitäre FEC Routenpräfixen entspricht, die von dem Ausgangsknoten stammen, der das Label von der Host-FEC ausleiht, wobei das Label ein eingehendes Label, ein ausgehendes Label oder eine Kombination aus dem eingehenden Label und dem ausgehenden Label ist.

8. Vorrichtung nach Anspruch 7, ferner umfassend:
ein Sendemodul (132), das konfiguriert ist, um, wenn der erste Knoten nicht der Eingangsknoten ist, eine erste Nachricht an einen Upstream-Knoten des ersten Knotens zu senden, wobei die erste Nachricht Informationen trägt, die eine Label-Ausleihebeziehung zwischen der Host-FEC und der parasitären FECs identifizieren; wobei die Label-Ausleihebeziehung zum Nehmen des Labels der Host-FEC als das Label der parasitären FEC verwendet wird, um den Upstream-Knoten zu veranlassen, gemäß der ersten Nachricht, die Label-Ausleihebeziehung zwischen der Host-FEC und der parasitären FEC zu bestimmen und den MPLS LSP herzustellen, der der parasitären FEC entspricht.

9. Vorrichtung nach Anspruch 8, ferner umfassend:
ein erstes Bestimmungsmodul (142), das konfiguriert ist, um, wenn der erste Knoten der Ausgangsknoten ist, die Label-Ausleihebeziehung zwischen der Host-FEC und der parasitären FEC gemäß einer zuvor bestimmten Richtlinie zu bestimmen; oder
ein zweites Bestimmungsmodul (144), das konfiguriert ist, um, wenn der erste Knoten nicht der Ausgangsknoten ist, die Label-Ausleihebeziehung zwischen der Host-FEC und der parasitären FEC mittels Empfangen einer Benachrichtigungsnachricht zu bestimmen, die der Host-FEC des Ausgangsknotens entspricht.

10. Vorrichtung nach Anspruch 9, wobei das zweite Bestimmungsmodul (144) umfasst:
eine erste Empfangseinheit (152), die konfiguriert ist, um eine oder mehrere Flooding-Nachrichten zum Benachrichtigen eines Routenpräfixes des Ausgangsknotens zu empfangen, wobei die Flooding-Nachricht mindestens eines von einem Host-Routenpräfix und einem parasitären Routenpräfix trägt; das Host-Routenpräfix zum Identifizieren des Ausgangsknotens verwendet wird und der Host-FEC entspricht; das parasitäre Routenpräfix mit dem Host-Routenpräfix übereinstimmt und der parasitären FEC entspricht;
eine zweite Empfangseinheit (154), die konfiguriert ist, um eine zweite Nachricht zu empfangen, die durch einen Downstream-Knoten des ersten Knotens gesendet wird, wobei die zweite Nachricht Identifikationsinformationen zum Identifizieren der Host-FEC trägt; und
eine erste Bestimmungseinheit (156), die konfiguriert ist, um, gemäß den Identifikationsinformationen und dem Routenpräfix des Ausgangsknotens, das durch die Flooding-Nachricht benachrichtigt wird, die Label-Ausleihebeziehung zu bestimmen als: das Label der Host-FEC wird als das Label der parasitären FEC genommen, wobei die parasitäre FEC dem parasitären Routenpräfix entspricht und das parasitäre Routenpräfix mit dem Host-Routenpräfix übereinstimmt.

11. Vorrichtung nach Anspruch 10, ferner umfassend:
ein Aktualisierungsmodul (162), das konfiguriert ist, um, gemäß der Label-Ausleihebeziehung, Label-Ausleiheinformationen zu aktualisieren, die lokal gespeichert sind und der Host-FEC entsprechen.

12. Vorrichtung nach Anspruch 10, wobei
das Aktualisierungsmodul (162) umfasst:
eine zweite Bestimmungseinheit (1622), die konfiguriert ist, um, gemäß der Label-Ausleihebeziehung, eine erste Klasse von parasitären FECs zu bestimmen, denen es erlaubt ist, das Label der Host-FEC auszuleihen;
das Aktualisierungsmodul (162) ferner mindestens eine der folgenden Einheiten umfasst:
eine Hinzufügeeinheit (1624), die konfiguriert ist, um, gemäß der bestimmten ersten Klasse von parasitären FECs, die Label-Ausleiheinformationen darüber hinzuzufügen, dass die parasitäre FEC, die zu der ersten Klasse von parasitären FECs gehört, aber das Label der Host-FEC nicht ausleiht, das Label der Host-FEC ausleiht;
eine Abbrecheinheit (1626), die konfiguriert ist, um, gemäß der bestimmten ersten Klasse von parasitären FECs, die Label-Ausleihe der parasitären FEC abzubrechen, die nicht zu der ersten Klasse von parasitären FECs gehört, aber das Label der Host-FECs ausgeliehen hat; und
eine Löscheinheit (1628), die konfiguriert ist, um den LSP zu löschen, der durch die parasitäre FEC basierend auf dem Ausleihen des Labels der Host-FEC hergestellt wird, wobei die parasitäre FEC nicht zu der ersten Klasse von parasitären FECs gehört, aber das Label der Host-FEC ausgeliehen hat.

13. Speichermedium, das konfiguriert ist, um Programmcodes zum Durchführen eines Verfahrens zum Herstellen eines Pfades nach einem der Ansprüche 1 bis 6 zu speichern.

## Revendications

1. Procédé d'établissement d'un chemin, comprenant :
sur un premier noeud dans un chemin allant d'un noeud d'entrée à un noeud de sortie, la prise d'une étiquette d'une classe d'équivalence d'acheminement, FEC, hôte du noeud de sortie en guise d'étiquette d'une FEC parasitaire du noeud de sortie pour établir une relation d'emprunt d'étiquette entre la FEC hôte et la FEC parasitaire, et l'établissement d'un chemin à commutation d'étiquettes, LSP basé sur une commutation multiprotocole par étiquette, MPLS, correspondant à la FEC parasitaire (S202) ;
dans lequel, la FEC hôte indique un prêteur d'étiquette et la FEC parasitaire indique un emprunt d'étiquette, et la FEC hôte du noeud de sortie correspond à un préfixe de route hôte du noeud de sortie et la FEC parasitaire correspond à des préfixes de route ayant pour origine le noeud de sortie qui emprunte l'étiquette auprès de la FEC hôte, dans lequel l'étiquette est une étiquette entrante, une étiquette sortante, ou une combinaison de l'étiquette entrante et de l'étiquette sortante.

2. Procédé tel que revendiqué dans la revendication 1, comprenant en outre :
lorsque le premier noeud n'est pas le noeud d'entrée, l'envoi d'un premier message à un noeud amont du premier noeud, dans lequel le premier message comporte des informations identifiant une relation d'emprunt d'étiquette entre la FEC hôte et la FEC parasitaire ; la relation d'emprunt d'étiquette est utilisée pour prendre l'étiquette de la FEC hôte en guise d'étiquette de la FEC parasitaire, de façon à amener le noeud amont à déterminer, selon le premier message, la relation d'emprunt d'étiquette entre la FEC hôte et la FEC parasitaire, et à établir le LSP MPLS correspondant à la FEC parasitaire.

3. Procédé tel que revendiqué dans la revendication 2, lequel, avant envoi du premier message au noeud amont du premier noeud, comprenant en outre :
lorsque le premier noeud est le noeud de sortie, la détermination de la relation d'emprunt d'étiquette entre la FEC hôte et la FEC parasitaire selon une politique prédéterminée ; ou,
lorsque le premier noeud n'est pas le noeud de sortie, la détermination de la relation d'emprunt d'étiquette entre la FEC hôte et la FEC parasitaire au moyen de la réception d'un message de notification correspondant à la FEC hôte du noeud de sortie.

4. Procédé tel que revendiqué dans la revendication 3, dans lequel la détermination de la relation d'emprunt d'étiquette entre la FEC hôte et la FEC parasitaire au moyen de la réception du message de notification correspondant à la FEC hôte du noeud de sortie comprend :
la réception d'un ou plusieurs messages envoyés en masse pour notifier un préfixe de route du noeud de sortie, dans lequel le message envoyé en masse comporte au moins un d'un préfixe de route hôte et d'un préfixe de route parasitaire ; le préfixe de route hôte est utilisé pour identifier le noeud de sortie, et correspond à la FEC hôte ; le préfixe de route parasitaire concorde avec le préfixe de route hôte, et correspond à la FEC parasitaire ;
la réception d'un deuxième message envoyé par un noeud aval du premier noeud, dans lequel le deuxième message comporte des informations d'identification pour identifier la FEC hôte ;
selon les informations d'identification et le préfixe de route du noeud de sortie qui est notifié par le message envoyé en masse, la détermination de la relation d'emprunt d'étiquette en tant que : l'étiquette de la FEC hôte est prise en guise d'étiquette de la FEC parasitaire, dans lequel la FEC parasitaire correspond au préfixe de route parasitaire, et le préfixe de route parasitaire concorde avec le préfixe de route hôte.

5. Procédé tel que revendiqué dans la revendication 3 ou 4, lequel après détermination de la relation d'emprunt d'étiquette entre la FEC hôte et la FEC parasitaire au moyen de la réception du message de notification correspondant à la FEC hôte du noeud de sortie, comprenant en outre : selon la relation d'emprunt d'étiquette, la mise à jour des informations d'emprunt d'étiquette qui sont enregistrées localement et correspondent à la FEC hôte.

6. Procédé tel que revendiqué dans la revendication 5, dans lequel selon la relation d'emprunt d'étiquette, la mise à jour des informations d'emprunt d'étiquette qui sont enregistrées localement et correspondent à la FEC hôte comprend :
selon la relation d'emprunt d'étiquette, la détermination d'une première classe de FEC parasitaires qui sont autorisées à emprunter l'étiquette de la FEC hôte ;
la mise en oeuvre d'au moins une des opérations suivantes :
selon la première classe déterminée de FEC parasitaires, l'ajout des informations d'emprunt d'étiquette concernant le fait que la FEC parasitaire, qui appartient à la première classe de FEC parasitaires, mais n'emprunte pas l'étiquette de la FEC hôte, emprunte l'étiquette de la FEC hôte ;
selon la première classe déterminée de FEC parasitaires, l'annulation de l'emprunt d'étiquette de la FEC parasitaire qui n'appartient pas à la première classe de FEC parasitaires, mais a emprunté l'étiquette de la FEC hôte, et la suppression du LSP qui est établi par la FEC parasitaire sur la base de l'emprunt de l'étiquette de la FEC hôte, dans lequel le FEC parasitaire n'appartient pas à la première classe de FEC parasitaires, mais a emprunté l'étiquette de la FEC hôte.

7. Dispositif comprenant un moyen pour établir un chemin, comprenant :
un module d'établissement (122), qui est configuré pour prendre, sur un premier noeud dans un chemin allant d'un noeud d'entrée à un noeud de sortie, une étiquette d'une classe d'équivalence d'acheminement, FEC, hôte du noeud de sortie en guise d'étiquette d'une FEC parasitaire du noeud de sortie pour établir une relation d'emprunt d'étiquette entre la FEC hôte et la FEC parasitaire, et établir un chemin à commutation d'étiquettes, LSP basé sur une commutation multiprotocole par étiquette, MPLS, correspondant à la FEC parasitaire ;
dans lequel, la FEC hôte indique un prêteur d'étiquette et la FEC parasitaire indique un emprunt d'étiquette, et la FEC hôte du noeud de sortie correspond à un préfixe de route hôte du noeud de sortie et la FEC parasitaire correspond à des préfixes de route ayant pour origine le noeud de sortie qui emprunte l'étiquette auprès de la FEC hôte, dans lequel l'étiquette est une étiquette entrante, une étiquette sortante, ou une combinaison de l'étiquette entrante et de l'étiquette sortante.

8. Dispositif tel que revendiqué dans la revendication 7, comprenant en outre :
un module d'envoi (132), qui est configuré pour envoyer, lorsque le premier noeud n'est pas le noeud d'entrée, un premier message à un noeud amont du premier noeud, dans lequel le premier message comporte des informations identifiant une relation d'emprunt d'étiquette entre la FEC hôte et la FEC parasitaire ; la relation d'emprunt d'étiquette est utilisée pour prendre l'étiquette de la FEC hôte en guise d'étiquette de la FEC parasitaire, de façon à amener le noeud amont à déterminer, selon le premier message, la relation d'emprunt d'étiquette entre la FEC hôte et la FEC parasitaire, et à établir le LSP MPLS correspondant à la FEC parasitaire.

9. Dispositif tel que revendiqué dans la revendication 8, comprenant en outre :
un premier module de détermination (142), qui est configuré pour déterminer, lorsque le premier noeud est le noeud de sortie, la relation d'emprunt d'étiquette entre la FEC hôte et la FEC parasitaire selon une politique prédéterminée ; ou,
un deuxième module de détermination (144), qui est configuré pour déterminer, lorsque le premier noeud n'est pas le noeud de sortie, la relation d'emprunt d'étiquette entre la FEC hôte et la FEC parasitaire au moyen de la réception d'un message de notification correspondant à la FEC hôte du noeud de sortie.

10. Dispositif tel que revendiqué dans la revendication 9, dans lequel le deuxième module de détermination (144) comprend :
une première unité de réception (152), qui est configurée pour recevoir un ou plusieurs messages envoyés en masse pour notifier un préfixe de route du noeud de sortie, dans lequel le message envoyé en masse comporte au moins un d'un préfixe de route hôte et d'un préfixe de route parasitaire ; le préfixe de route hôte est utilisé pour identifier le noeud de sortie, et correspond à la FEC hôte ; le préfixe de route parasitaire concorde avec le préfixe de route hôte, et correspond à la FEC parasitaire ;
une deuxième unité de réception (154), qui est configurée pour recevoir un deuxième message envoyé par un noeud aval du premier noeud, dans lequel le deuxième message comporte des informations d'identification pour identifier la FEC hôte ; et
une première unité de détermination (156), qui est configurée pour déterminer, selon les informations d'identification et le préfixe de route du noeud de sortie qui est notifié par le message envoyé en masse, la relation d'emprunt d'étiquette en tant que : l'étiquette de la FEC hôte est prise en guise d'étiquette de la FEC parasitaire, dans lequel la FEC parasitaire correspond au préfixe de route parasitaire, et le préfixe de route parasitaire concorde avec le préfixe de route hôte.

11. Dispositif tel que revendiqué dans la revendication 10, comprenant en outre :
un module de mise à jour (162), qui est configuré pour mettre à jour, selon la relation d'emprunt d'étiquette, des informations d'emprunt d'étiquette qui sont enregistrées localement et correspondent à la FEC hôte.

12. Dispositif tel que revendiqué dans la revendication 10, dans lequel,
le module de mise à jour (162) comprend :
une deuxième unité de détermination (1622), qui est configurée pour déterminer, selon la relation d'emprunt d'étiquette, une première classe de FEC parasitaires qui sont autorisées à emprunter l'étiquette de la FEC hôte ;
le module de mise à jour (162) comprend en outre au moins une des unités suivantes :
une unité d'ajout (1624), qui est configurée pour ajouter, selon la première classe déterminée de FEC parasitaires, les informations d'emprunt d'étiquette concernant le fait que la FEC parasitaire, qui appartient à la première classe de FEC parasitaires, mais n'emprunte pas l'étiquette de la FEC hôte, emprunte l'étiquette de la FEC hôte ;
une unité d'annulation (1626), qui est configurée pour annuler, selon la première classe déterminée de FEC parasitaires, l'emprunt d'étiquette de la FEC parasitaire qui n'appartient pas à la première classe de FEC parasitaires, mais a emprunté l'étiquette de la FEC hôte ; et
une unité de suppression (1628), qui est configurée pour supprimer le LSP qui est établi par la FEC parasitaire sur la base de l'emprunt de l'étiquette de la FEC hôte, dans lequel la FEC parasitaire n'appartient pas à la première classe de FEC parasitaires, mais a emprunté l'étiquette de la FEC hôte.

13. Support de stockage, étant configuré pour stocker des codes de programme pour mettre en oeuvre un procédé d'établissement d'un chemin tel que revendiqué dans l'une quelconque des revendications 1 à 6.
